# EUROPEAN PATENT APPLICATION

(11) **EP 2 418 121 A2**
(43) Date of publication of application: **15.02.2012**
(21) Application number: 11176643.2
(22) Date of filing: 05.08.2011
(51) Int. Cl.: B60Q 1/08, F21V 14/08, F21S 8/12

(54) **Vehicular headlamp**

(30) Priority: 09.08.2010 JP 2010178464
(71) Applicant: Koito Manufacturing Co., Ltd., Tokyo 108-8711 (JP)
(72) Inventor: Komatsu, Motohiro, Shimizu-shi, Shizuoka (JP)
(74) Representative: Grünecker, Kinkeldey, Stockmair & Schwanhäusser

(57) **Abstract**

A shade mechanism 15 is formed from a pivoting shaft member that is configured so as to be pivotable about a horizontal axis line that extends in a vehicle body width direction near below an optical axis Ax. The shade mechanism 15 includes: a rotating shade 20 on which a plurality of light distribution generating portions is formed along a peripheral direction, the plurality of light distribution generating portions including a following high beam distribution generating portion 20A that is projectingly provided on an outer peripheral surface of the pivoting shaft member in order to shield a portion of a high beam distribution pattern; and a rotating motor 30 that selectively moves the plurality of light distribution generating portions to an upper side by pivoting the rotating shade 20. A side surface of the following high beam distribution generating portion 20A in a vehicle width direction is provided with a reflecting portion 22 for reflecting light from a semiconductor light emitting element 10L in a direction that is not incident to a projection lens 8.

## Description

### [Technical Field]

The present invention relates to a vehicular lamp. In particular, the present invention relates to a projector type vehicular headlamp that includes a variable light distribution function that is capable of varying a headlamp light distribution depending on whether a preceding vehicle, an oncoming vehicle, or the like is present.

### [Related Art]

Known vehicular headlamps according to related art include a projector type lamp unit that is configured such that a reflector condenses and reflects light from a light source, which is disposed on an optical axis that extends in a vehicle longitudinal direction, forward along the optical axis, and the reflected light is radiated forward of the lamp through a projection lens provided in front of the reflector.
When such a projector type lamp unit is used, a shade that is capable of shielding a portion of the reflected light from the reflector is provided between the projection lens and the reflector. By shielding an unnecessary portion of light in accordance with a required light distribution pattern such as, for example, a low beam distribution pattern, a cut-off line can be formed at an upper end portion of the desired light distribution pattern.

Another projector type lamp unit proposed further includes a shade (rotating shade) that is formed from a pivoting shaft member configured so as to be pivotable about a horizontal axis line that extends in a vehicle width direction. By pivoting the rotating shade depending on a vehicle travel situation, the projector type lamp unit achieves a variable light distribution function that selectively varies the light distribution pattern formed ahead of the vehicle using radiated light from the lamp unit.

For example, Patent Document 1 describes a vehicular projector headlight in which a projector type headlight includes a restriction shaft (rotating shade) whose outer peripheral surface is formed with a plurality of light distribution generating portions, and the projector type headlight is disposed on both left and right sides of the vehicle. For example, by forming a shielded light section (non-radiated section) at which a portion (e.g., a generally center portion in the vehicle width direction) of a high beam distribution pattern radiated ahead of the vehicle is shielded, the vehicular projector headlight can improve visibility by changing a high beam distribution pattern depending on whether a preceding vehicle, an oncoming vehicle, or the like is present.

### [Prior Art Literature]

### [Patent Documents]

[Patent Document 1] US 2010/0033978 A

### [Disclosure of the Invention]

### [Problem to be Solved by the Invention]

In the configuration of the vehicular projector headlight disclosed in Patent Document 1 above, however, pivoting the rotating shade in order to change the light distribution pattern may end up positioning the light distribution generating portions, which are formed on the outer peripheral surface of the rotating shade to form the shielded light portion in the high beam distribution pattern, forward of a rear focal point of the projection lens. If side surfaces of the light distribution generating portions in the vehicle width direction are positioned forward of the rear focal point of the projection lens, light from the light source that is incident to the side surfaces in the vehicle width direction is reflected and enters the projection lens.

A problem thus arises because, when the rotating shade that is used to change the width of the shielded light section in the vehicle width direction or the like to vary the light distribution pattern is pivoted, glare occurs in the shielded light section.
Therefore, it is an object of the present invention to solve the problem described above, and provide a vehicular headlamp that is capable of changing a headlamp light distribution depending on whether a preceding vehicle, an oncoming vehicle, or the like is present and also capable of preventing glare from occurring in a shielded light section formed in a high beam distribution pattern.

### [Means for Solving the Problem]

The above object of the present invention is achieved by a vehicular headlamp according to claim 1. Such a vehicular headlamp includes: a projection lens that is arranged on an optical axis extending in a vehicle longitudinal direction; a light source that is arranged rearward of the projection lens; a reflector that reflects light from the light source forward along the optical axis; and a shade mechanism that is arranged between the projection lens and the light source, and shields a portion of reflected light from the reflector and a portion of direct light from the light source to form a cut-off line of a light distribution pattern. The vehicular headlamp is characterized in that the shade mechanism includes: a rotating shade that is formed from a pivoting shaft member that is configured so as to be arranged along a horizontal axis line extending in a vehicle body width direction near below the optical axis and pivotable about the horizontal axis line, and formed with a plurality of light distribution generating portions that includes a first high beam distribution generating portion that is projectingly provided on an outer peripheral surface of the pivoting shaft member for shielding a portion of a high beam distribution pattern, wherein a side surface of the first high beam distribution generating portion in a vehicle width direction is provided with a reflecting portion for reflecting light from the light source in a direction that is not incident to the projection lens.
Preferably, the projection lens, the light source, the reflector and the shade are all arranged inside a lamp chamber that is formed by a lamp body and a cover.
More preferably, the shade mechanism further includes an actuator that pivots the rotating shade to selectively move the plurality of light distribution generating portions to an upper side.

According to the vehicular headlamp of the present invention described above, light from the light source that is incident to the side surface of the first high beam distribution generating portion in the vehicle width direction is reflected by the reflecting portion in a direction that is not incident to the projection lens. Thus, even when the side surface of the first high beam distribution generating portion in the vehicle width direction is positioned forward of a rear focal point of the projection lens, light reflected by this side surface in the vehicle width direction is not incident to the projection lens. Therefore, glare does not occur in a shielded light section formed in the high beam distribution pattern.

Note that, in the vehicular headlamp with the configuration described above, the reflecting portion is preferably formed by a vertical knurled groove having a triangular cross section.
According to the vehicular headlamp thus configured, an outer contour of the first high beam distribution generating portion can be maintained, and at the same time, the reflecting portion can be integrally molded with ease on the side surface in the vehicle width direction. Therefore, a cut-off line of the shielded light section formed in the high beam distribution pattern can be maintained, while easily forming the reflecting portion that is capable of reliably reflecting light from the light source in a direction that is not incident to the projection lens.

The vehicular headlamp with the configuration described above preferably further includes: a pair of the light sources that is disposed with the optical axis therebetween in the vehicle width direction; and a pair of reflectors that respectively form one of left and right one-sided high beam distribution patterns by reflecting light from the respective light sources forward along the optical axis.

According to the vehicular headlamp thus configured, a one-sided high beam distribution pattern can be easily formed by respectively controlling the lighting of the pair of light sources. Therefore, a plurality of types of high beam distribution patterns can be easily formed, and an optimal visibility in accordance with travel conditions can be achieved.

### [Effects of the Invention]

According to the vehicular headlamp of the present invention described above, it is possible to change a headlamp light distribution depending on whether a preceding vehicle, an oncoming vehicle, or the like is present and also prevent glare from occurring in a shielded light section formed in a high beam distribution pattern.

### [Brief Description of the Drawings]

[FIG 1] FIG. 1 is a schematic vertical cross-sectional view of a vehicular headlamp according to an embodiment of the present invention.
[FIG. 2] FIG. 2 is a schematic horizontal cross-sectional view of a lamp unit in the vehicular headlamp of FIG. 1.
[FIG. 3] FIG. 3 is an overall perspective view of a rotating shade shown in FIG. 2.
[FIG. 4] FIG. 4 is a perspective view of an essential portion for explaining a state in which the rotating shade in the lamp unit shown in FIG. 2 generates a high beam distribution pattern.
[FIG 5] FIG. 5 is a perspective view of an essential portion for explaining a state in which the rotating shade in the lamp unit shown in FIG 2 shields light at a generally center portion in a vehicle width direction of the high beam distribution pattern.
[FIG. 6] FIG. 6 shows drawings of light distribution pattern examples formed on virtual vertical screens positioned 25 meters in front of the vehicular headlamp by light that is radiated forward from the vehicular headlamp, wherein 6A shows a normal high beam distribution pattern, 6B shows a following high beam distribution pattern, 6C shows an oncoming high beam distribution pattern, and 6D shows a one-sided oncoming high beam distribution pattern.
[FIG. 7] FIG. 7 is a view that shows a state in which glare occurs in the oncoming high beam distribution pattern.

### [Best Modes for Carrying Out the Invention]

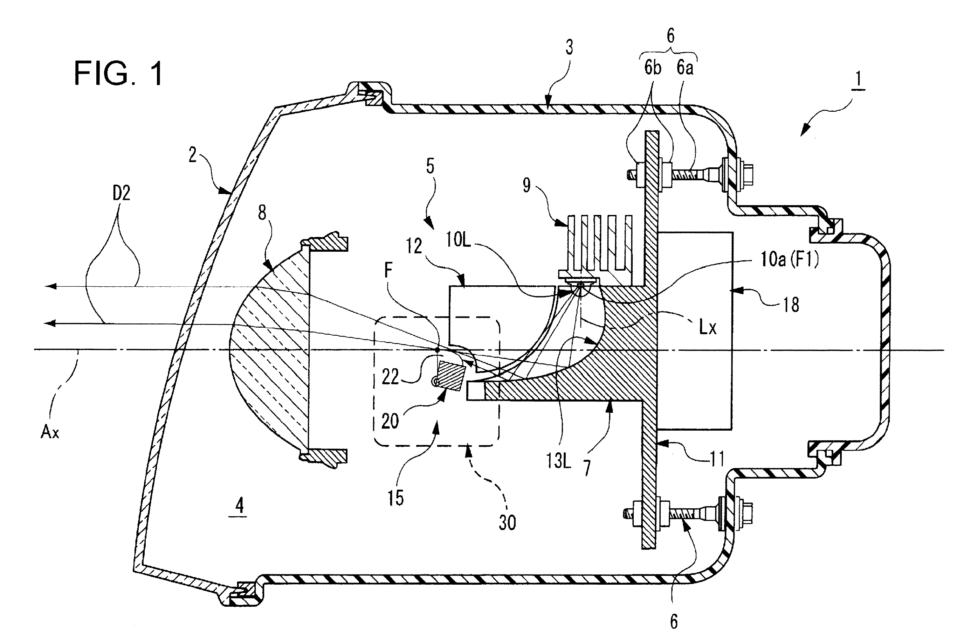

Hereinafter, a vehicular headlamp according to an embodiment of the present invention will be described in detail with reference to the attached drawings.
As shown in FIG 1, in a vehicular headlamp 1 of the present embodiment, a lamp unit 5 is accommodated inside a lamp chamber 4 that is defined and formed by a plain transparent cover (cover) 2 and a lamp body 3.
The lamp unit 5 is supported by the lamp body 3 via an aiming mechanism 6 that is configured from an aiming screw 6a and an aiming nut 6b. The aiming mechanism 6 is a mechanism for finely adjusting an attachment position and an attachment angle of the lamp unit 5 by adjusting tightening by the aiming nut 6b. After aiming adjustment, an optical Ax of the lamp unit 5 extends in a direction that is approximately 0.5 degrees to 0.6 degrees downward with respect to a vehicle longitudinal direction.

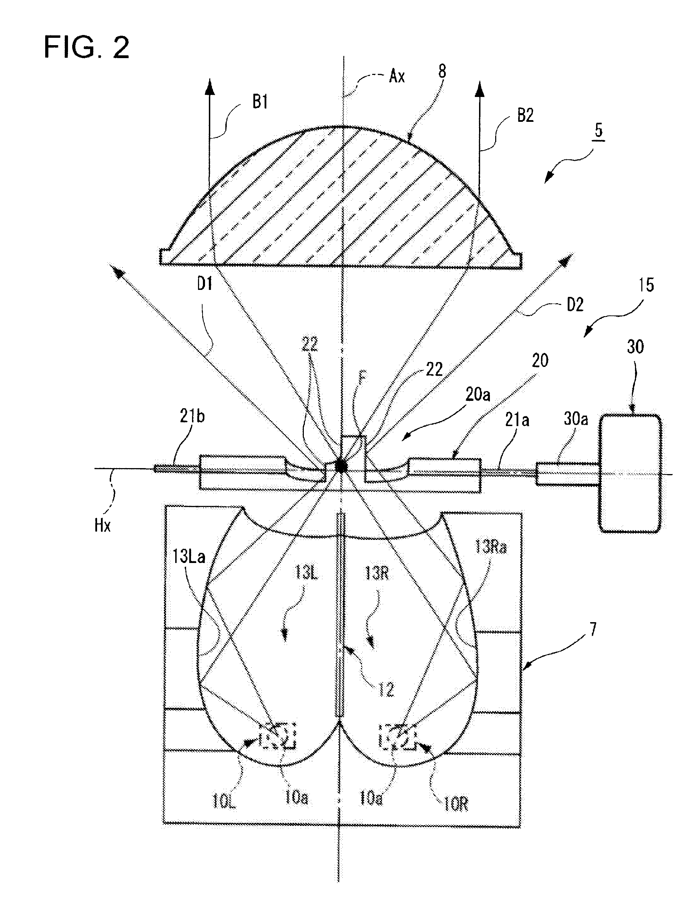

As shown in FIGS. 1 and 2, the lamp unit 5 is a projector type lamp unit and includes: a projection lens 8 that is arranged on the optical axis Ax extending in the vehicle longitudinal direction; a pair of left and right semiconductor light emitting elements (light sources) 10L, 10R that are arranged rearward of a rear focal point F of the projection lens 8; a pair of left and right reflectors 13L, 13R that reflect light from the respective semiconductor light emitting elements 10L, 10R forward along the optical axis Ax; and a shade mechanism 15 that is arranged between the projection lens 8 and the semiconductor light emitting elements 10L, 10R and shields a portion of reflected light from the reflectors 13L, 13R and a portion of direct light from the semiconductor light emitting elements 10L, 10R to form a cut-off line of a light distribution pattern.

The projection lens 8 is formed from a planoconvex lens, wherein a front surface is a convex surface and a rear surface is a plane surface. An image on a focal plane that includes the rear focal point F of the projection lens 8 is projected forward as an inverted image.

In the case of the present embodiment, the semiconductor light emitting elements 10L, 10R are white diodes that each include a light emitting portion 10a. The pair of semiconductor light emitting elements 10L, 10R are arranged to the left and right of the optical axis Ax in a vehicle width direction, and the semiconductor light emitting elements 10L, 10R are fixed to an LED support member 9 with an illumination axis Lx of the semiconductor light emitting elements 10L, 10R oriented generally vertically downward so as to be perpendicular to an illumination direction (leftward in FIG. 1) of the lamp unit 5. Note that the semiconductor light emitting elements 10L, 10R are independently controlled to light by a lighting control device not shown in the drawings.

As shown in FIG 2, the reflectors 13L, 13R of the present embodiment are mutually connected as an integrated reflecting member and include a pair of left and right reflecting surfaces 13La, 13Ra centered on the optical axis Ax. The reflecting surfaces 13La, 13 Ra are reflective surfaces generally shaped as ellipsoidal spherical surfaces that are formed by, for example, aluminizing a portion of a reflector body 7 that is formed from an aluminum alloy, resin, or the like.

The reflecting surfaces 13La, 13Ra are each set to a general elliptical shape whose cross section has a first focal point (F1) at a center position of the light emitting portion 10a, and a second focal point near the rear focal point F of the projection lens 8. The reflecting surfaces 13La, 13Ra are arranged so as to respectively face the left and right semiconductor light emitting elements 10L, 10R. Accordingly, the reflecting surfaces 13La, 13Ra condense and reflect light from the light emitting portion 10a forward along the optical axis Ax. In addition, the eccentricity of the reflecting surfaces 13La, 13Ra is set so as to gradually increase from a vertical cross section toward a horizontal cross section.

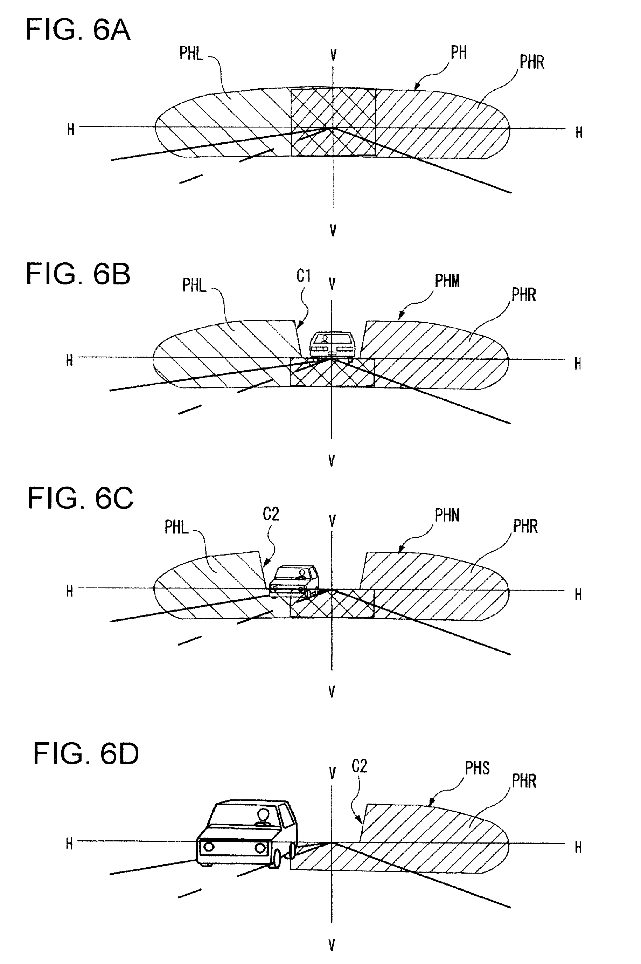

A fixed light shielding plate 12 is arranged at the boundary between the reflectors 13L, 13R so as to extend along the optical axis Ax to just behind the rear focal point F. The fixed light shielding plate 12 shields a portion of reflected light B1, B2 on an optical axis center side that is respectively reflected by the reflecting surfaces 13La, 13Ra, and forms a vertical cut-off line on the optical axis center side of a left high beam distribution pattern PHL and a right high beam distribution pattern PHR (see FIG. 6).

As shown in FIG 1, the LED support member 9 is attached and fixed to an upper surface of the reflector body 7, and a support frame 11 is fixed to a rear surface of the reflector body 7. The support frame 11 is supported by the lamp body 3 via the aiming mechanism 6, and a heat radiation fin 18 is projectingly provided on a rear surface of the support frame 11.

As shown in FIGS. 1 to 5, the shade mechanism 15 of the present embodiment includes: a rotating shade 20 that is formed from a pivoting shaft member, which is arranged along a horizontal axis line Hx that extends in a vehicle body width direction near below the optical axis Ax, and configured so as to be pivotable about the horizontal axis line Hx; and a rotating motor 30 that serves as an actuator to pivot the rotating shade 20.

The rotating shade 20 of the present embodiment is formed from a metal member generally shaped as a quadrangular prism that includes at both ends thereof support shafts 21, 21b that are arranged on the horizontal axis line Hx. The support shaft 21a projectingly provided on one end side of the rotating shade 20 is connected to a motor shaft 30a of the rotating motor 30.
A plurality of light distribution generating portions are formed on an outer peripheral surface of the rotating shade 20 along a peripheral direction. The plurality of light distribution generating portions include: a following high beam distribution generating portion (first high beam distribution generating portion) 20A that is projectingly provided on the outer peripheral surface in order to shield a portion of a high beam distribution pattern (a generally center portion in the vehicle width direction according to the present embodiment); an oncoming high beam distribution generating portion 20B; and a normal high beam distribution generating portion 20C.

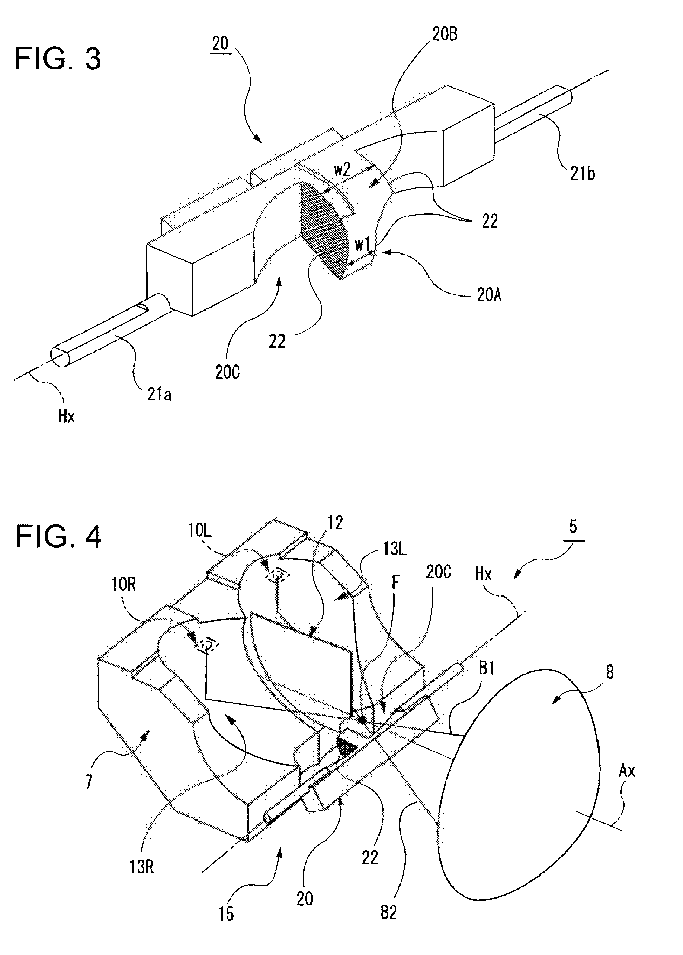

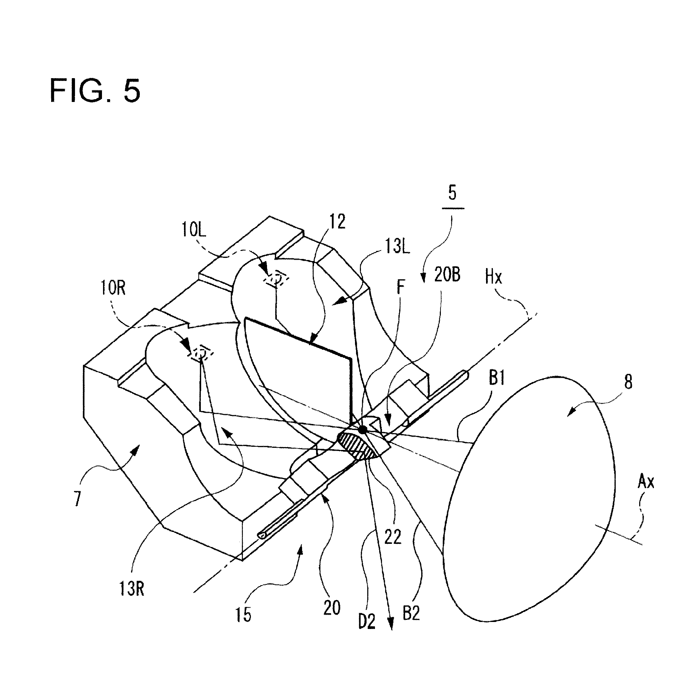

Further, as shown in FIGS. 3 and 5, reflecting portions 22 are provided on both side surfaces of the following high beam distribution generating portion 20A and the oncoming high beam distribution generating portion 20B in the vehicle width direction. The reflecting portions 22 reflect light from the semiconductor light emitting elements 10L, 10R in a direction that is not incident to the projection lens 8.

The reflecting portions 22 are formed by vertical knurled grooves with triangular cross sections. The orientation of the knurled grooves and inclination angle of inclined surfaces thereof are appropriately set such that light reflected forward by the reflectors 13L, 13R is reflected in a direction that is not incident to an incident surface (rear surface) of the projection lens 8 as shown in FIG. 2.

By forming the reflecting portions 22 from vertical knurled grooves as described above, an outer contour of the following high beam distribution generating portion 20A and the oncoming high beam distribution generating portion 20B can be maintained, and at the same time the reflecting portions 22 can be integrally molded with ease on both side surfaces thereof in the vehicle width direction. Therefore, a cut-off line of a shielded light section C1 or C2 formed in the high beam distribution pattern can be maintained, while easily forming the reflecting portions 22 that are capable of reliably reflecting light from the semiconductor light emitting elements 10L, 10R in a direction that is not incident to the projection lens 8 (see FIG. 6).
Note that if the reflecting portion is formed by a single inclined surface, curved surface, or the like, the outer contour of the light distribution generating portion changes, and this in turn changes the cut-off line of the shielded light section C1 or C2 formed in the high beam distribution pattern.

The actuator of the present embodiment is formed from the rotating motor 30 that is a step motor or the like, and the actuator rotates and drives the rotating shade 20 through the support shaft 21a that is connected to the motor shaft 30a.
The rotating motor 30 is driven and controlled by a control unit, not shown in the drawings, in response to a vehicle travel situation or operation of a beam changing switch.

As shown in FIG 3, the following high beam distribution generating portion 20A and the oncoming high beam distribution generating portion 20B have an outer contour whose radial distance from the horizontal axis line Hx to the outer peripheral surface is generally fixed in a predetermined angle domain of the outer peripheral surface. In addition, a width W2 of the oncoming high beam distribution generating portion 20B in the vehicle body width direction is set wider than a width W1 of the following high beam distribution generating portion 20A in the vehicle body width direction. Further, the normal high beam distribution generating portion 20C is formed as a cutout portion with almost no radial distance between the horizontal axis line Hx and the outer peripheral surface in the predetermined angle domain of the outer peripheral surface.

That is, in the case of the present embodiment, the rotating shade 20 is configured such that the following high beam distribution generating portion 20A generates a following high beam distribution pattern PHM, the oncoming high beam distribution generating portion 20B generates an oncoming high beam distribution pattern PHN, and the normal high beam distribution generating portion 20C generates the normal high beam distribution pattern PH (see FIG. 6).

The rotating motor 30 pivots the rotating shade 20 to selectively arrange at top the plurality of light distribution generating portions that include the following high beam distribution generating portion 20A, the oncoming high beam distribution generating portion 20B, and the normal high beam distribution generating portion 20C formed on the outer peripheral surface of the rotating shade 20. Thus, the high beam distribution pattern generated by shielding light reflected by the reflector can be changed.

For example, as shown in FIG. 4, if the rotating motor 30 is pivoted and controlled such that the normal high beam distribution generating portion 20C is positioned above the horizontal axis line Hx, the normal high beam distribution generating portion 20C becomes arranged on a focal plane of the rear focal point F of the projection lens 8. Thus, the reflected light B1, B2 from the reflecting surfaces 13La, 13Ra of the reflectors 13L, 13R is practically not shielded by the rotating shade 20 and is incident to the projection lens 8.

FIG. 6A is a drawing that shows a light distribution pattern example formed on a virtual vertical screen positioned 25 meters in front of the vehicular headlamp 1 by light that is radiated forward from the lamp at such time.
As shown in the drawing, this light distribution pattern is the normal high beam distribution pattern PH that is synthesized by the left high beam distribution pattern PHL formed by the reflected light B 1 and the right high beam distribution pattern PHR formed by the reflected light B2.

As shown in FIGS. 1 and 2, if the rotating motor 30 is pivoted and controlled such that the following high beam distribution generating portion 20A is positioned above the horizontal axis line Hx, the following high beam distribution generating portion 20A becomes arranged on the focal plane of the rear focal point F of the projection lens 8. Thus, a portion of the reflected light B1, B2 from the reflecting surfaces 13La, 13Ra of the reflectors 13L, 13R is shielded, which removes a generally center portion in the vehicle width direction of the high beam distribution pattern that is projected forward from the projection lens 8.

FIG. 6B is a drawing that shows a light distribution pattern example formed on a virtual vertical screen positioned 25 meters in front of the vehicular headlamp 1 by light that is radiated forward from the lamp at such time.
As shown in the drawing, this light distribution pattern is the following high beam distribution pattern PHM, wherein the shielded light section C1 is formed at the generally center portion above a line H-H in the high beam distribution pattern that is synthesized by the left high beam distribution pattern PHL formed by the reflected light B1 and the right high beam distribution pattern PHR formed by the reflected light B2. With the following high beam distribution pattern PHM, the visibility of the host vehicle can be improved without subjecting a preceding vehicle traveling centrally ahead of the host vehicle to glare.

As shown in FIG. 5, if the rotating motor 30 is pivoted and controlled such that the oncoming high beam distribution generating portion 20B is positioned above the horizontal axis line Hx, the oncoming high beam distribution generating portion 20B becomes arranged on the focal plane of the rear focal point F of the projection lens 8. Thus, a portion of the reflected light B1, B2 from the reflecting surfaces 13La, 13Ra of the reflectors 13L, 13R is shielded, which removes a leftward center portion in the vehicle width direction of the high beam distribution pattern that is projected forward from the projection lens 8.

FIG. 6C is a drawing that shows a light distribution pattern example formed on a virtual vertical screen positioned 25 meters in front of the vehicular headlamp 1 by light that is radiated forward from the lamp at such time.
As shown in the drawing, this light distribution pattern is the oncoming high beam distribution pattern PHN, wherein the shielded light section C2 is formed at the leftward center portion above the line H-H in the high beam distribution pattern that is synthesized by the left high beam distribution pattern PHL formed by the reflected light B1 and the right high beam distribution pattern PHR formed by the reflected light B2. With the oncoming high beam distribution pattern PHN, the shielded light section C2 that is wider than the shielded light section C1 of the following high beam distribution pattern PHM is formed. Therefore, the visibility of the host vehicle can be improved without subjecting a preceding vehicle or an oncoming vehicle traveling on the left side ahead of the host vehicle to glare.

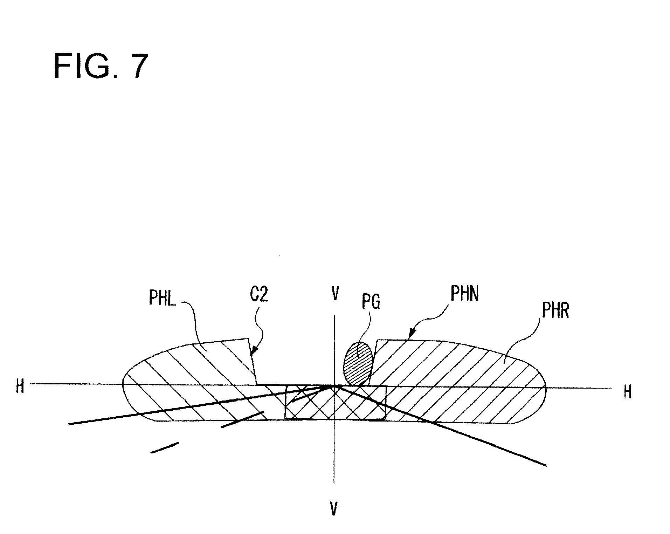

Note that, as shown in FIG 5, when the oncoming high beam distribution generating portion 20B formed on the outer peripheral surface of the rotating shade 20 is positioned above the horizontal axis line Hx, the following high beam distribution generating portion 20A becomes positioned forward of the rear focal point F of the projection lens 8. However, light D1, D2 from the semiconductor light emitting elements 10L, 10R that is incident to the side surfaces of the following high beam distribution generating portion 20A in the vehicle width direction is reflected in a direction that is not incident to the projection lens 8 by the reflecting portions 22 (see FIG. 2).
Thus, even when the side surfaces of the following high beam distribution generating portion 20A in the vehicle width direction are positioned forward of the rear focal point F of the projection lens 8, light reflected by these side surfaces in the vehicle width direction is not incident to the projection lens 8. Accordingly, glare PG as shown in FIG 7 does not occur in the shielded light section C2 formed in the oncoming high beam distribution pattern PHN.

Moreover, the vehicular headlamp 1 of the present embodiment includes the pair of semiconductor light emitting elements 10L, 10R disposed on either side of the optical axis Ax in the vehicle width direction; and the pair of left and right reflectors 13L, 13R that reflect light from the semiconductor light emitting elements 10L, 10R forward along the optical axis Ax. Thus, a one-sided high beam distribution pattern can be easily formed by respectively controlling the lighting of the pair of semiconductor light emitting elements 10L, 10R.

In other words, after pivoting and controlling the rotating motor 30 such that the oncoming high beam distribution generating portion 20B is positioned above the horizontal axis line Hx, the right semiconductor light emitting element 10R is turned off and only the left semiconductor light emitting element 10L is turned on. Thus, a portion of the reflected light B2 from the reflecting surface 13La of the reflector 13L is shielded, which removes a left section in the vehicle width direction of the one-sided high beam distribution pattern that is projected forward from the projection lens 8.

FIG. 6D is a drawing that shows a light distribution pattern example formed on a virtual vertical screen positioned 25 meters in front of the vehicular headlamp 1 by light that is radiated forward from the lamp at such time.
As shown in the drawing, this light distribution pattern is a one-sided oncoming high beam distribution pattern PHR, wherein the shielded light section C2 is formed leftward above the line H-H in the right high beam distribution pattern PHR formed by the reflected light B2. With the one-sided oncoming high beam distribution pattern PHR, the visibility of the host vehicle can be improved without subjecting a preceding vehicle or an oncoming vehicle passing on the left ahead of the host vehicle to glare.

Thus, according to the vehicular headlamp 1 of the present embodiment, the rotating motor 30 is driven and controlled by the control unit, not shown in the drawings, depending on whether a preceding vehicle, oncoming vehicle, or the like is present. By pivoting the rotating shade 20 depending on the vehicle travel situation, it is possible to selectively change between a plurality of types of high beam distribution patterns formed by light radiated from the lamp unit 5, and thereby achieve an optimal visibility in accordance with travel conditions.

According to the vehicular headlamp 1 of the present embodiment, the light D1, D2 from the semiconductor light emitting elements 10L, 10R that is incident to the side surfaces in the vehicle width direction of the following high beam distribution generating portion 20A and the oncoming high beam distribution generating portion 20B is reflected in a direction that is not incident to the projection lens 8 by the reflecting portions 22. Thus, even when the side surfaces in the vehicle width direction of the following high beam distribution generating portion 20A and the oncoming high beam distribution generating portion 20B are positioned forward of the rear focal point F of the projection lens 8, light reflected by these side surfaces in the vehicle width direction is not incident to the projection lens 8. Therefore, glare does not occur in the shielded light section C1 or C2 formed in the various high beam distribution patterns.

Note that the specific configurations of the projection lens, the light source, the reflector, the shade mechanism, the rotating shade, the actuator, the reflecting portions, and the like in the embodiment described above are not particularly limited to that of the above embodiment. Needless to say, various modifications based on the scope of the present invention are conceivable.
For example, although the above embodiment describes an example in which a semiconductor light emitting element is used as a light source, a light source bulb such as a discharge bulb or a halogen bulb may also be used. In addition, a solenoid and a gear mechanism may also be used as an actuator for pivoting the rotating shade.

In order to shield light at a generally center portion of the high beam distribution pattern in the vehicle width direction in the embodiment described above, the following high beam distribution generating portion 20A is projectingly provided as the first high beam distribution generating portion at the generally center portion of the pivoting shaft member in the vehicle width direction. However, the first high beam distribution generating portion of the present embodiment may be projectingly provided at any position in the vehicle width direction. For example, vehicular headlamps that each include the pivoting shaft member, on which the first high beam distribution generating portion is projectingly provided at the vehicle center side of the pivoting shaft member in the vehicle width direction, may be respectively arranged on the left and right sides of the vehicles. A shielded light section can also be formed by shielding the generally center portion in the vehicle width direction of the high beam distribution pattern radiated forward of the vehicle.

In addition, although the reflecting portion is formed by vertical knurled grooves with triangular cross sections in the embodiment described above, the present invention is not limited to this example. As another example, the reflecting portion may be configured by reflecting steps that are formed by aligning minute pyramids such as triangular pyramids or quadrangular pyramids.
The embodiment described above is configured to change between three high beam distribution patterns. However, the number of changes of the rotating shade is not limited to that of the above embodiment. In other words, the number of light distribution generating portions formed on the outer peripheral surface of the rotating shade may be set to any number depending on the type of light distribution patterns required, and in consideration of the travel environment, application, and so forth of the vehicle installed with the headlamp of the present invention.

### [Description of the Reference Numerals]

- 1: VEHICULAR HEADLAMP
- 2: TRANSPARENT COVER (COVER)
- 3: LAMP BODY
- 4: LAMP CHAMBER
- 5: LAMP UNIT
- 8: PROJECTION LENS
- 10L, 10R: SEMICONDUCTOR LIGHT EMITTING ELEMENT (LIGHT SOURCE)
- 10a: LIGHT EMITTING PORTION
- 13L, 13R: REFLECTOR
- 13La, 13Ra: REFLECTING SURFACE
- 15: SHADE MECHANISM
- 20: ROTATING SHADE
- 20A: FOLLOWING HIGH BEAM DISTRIBUTION GENERATING PORTION (FIRST HIGH BEAM DISTRIBUTION GENERATING PORTION)
- 20B: ONCOMING HIGH BEAM DISTRIBUTION GENERATING PORTION
- 20C: NORMAL HIGH BEAM DISTRIBUTION GENERATING PORTION
- 22: REFLECTING PORTION
- 30: ROTATING MOTOR (ACTUATOR)

## Claims

1. A vehicular headlamp (1) comprising a projection lens (8) that is arranged on an optical axis (Ax) extending in a vehicle longitudinal direction; a light source (10L, 10R) that is arranged rearward of the projection lens (8); a reflector (13L, 13R) that reflects light from the light source (10L, 10R) forward along the optical axis (Ax); and a shade mechanism (15) that is arranged between the projection lens (8) and the light source (10L, 10R), and shields a portion of reflected light from the reflector (13L, 13R) and a portion of direct light from the light source (10L, 10R) to form a cut-off line of a light distribution pattern, the vehicular headlamp (1) **characterized in that**
the shade mechanism (15) comprises:
a rotating shade (20) that is formed from a pivoting shaft member that is configured so as to be arranged along a horizontal axis line (Hx) extending in a vehicle body width direction near below the optical axis (Ax) and pivotable about the horizontal axis line (Hx), and formed with a plurality of light distribution generating portions (20A, 20B, 20C) that includes a first high beam distribution generating portion (20A) that is projectingly provided on an outer peripheral surface of the pivoting shaft member for shielding a portion of a high beam distribution pattern, wherein
a side surface of the first high beam distribution generating portion (20A) in a vehicle width direction is provided with a reflecting portion (22) for reflecting light from the light source (10L, 10R) in a direction that is not incident to the projection lens (8).

2. The vehicular headlamp (1) according to claim 1, **characterized in that**
the projection lens (8), the light source (10L, 10R), the reflector (13L, 13R) and the shade mechanism (15) are all arranged inside a lamp chamber (4) that is formed by a lamp body (3) and a cover (2)

3. The vehicular headlamp (1) according to claim 1 or 2, **characterized in that**
the shade mechanism (15) further comprises:
an actuator that pivots the rotating shade (20) to selectively move the plurality of light distribution generating portions (20A, 20B, 20C) to an upper side.

4. The vehicular headlamp (1) according to any one of claims 1 to 3, **characterized in that**
the reflecting portion (22) is formed by a vertical knurled groove having a triangular cross section.

5. The vehicular headlamp (1) according to any one of claims 1 to 4, **characterized in that**
the projection lens (8) is formed from a planoconvex lens, wherein a front surface is a convex surface and a rear surface is a plane surface.

6. The vehicular headlamp (1) according to any one of claims 1 to 5, **characterized by** further comprising:
a pair of the light sources (10L, 10R) that is disposed with the optical axis (Ax) therebetween in the vehicle width direction; and
a pair of the reflectors (13L, 13R) that respectively form one of left and right one-sided high beam distribution patterns by reflecting light from the respective light sources (10L, 10R) forward along the optical axis (Ax).
